# EUROPÄISCHE PATENTSCHRIFT

(11) **EP 3 784 086 B1**
(45) Veröffentlichungstag und Bekanntmachung des Hinweises auf die Patenterteilung: **16.06.2021**
(21) Anmeldenummer: 18721754.2
(22) Anmeldetag: 27.04.2018
(51) Int. Cl.: A43B 13/12, A43B 13/18, A43B 13/20, B29D 35/12

(54) **SCHUH, INSBESONDERE SPORTSCHUH**
SHOE, IN PARTICULAR A SPORTS SHOE
CHAUSSURE, EN PARTICULIER CHAUSSURE DE SPORT

(43) Veröffentlichungstag der Anmeldung: 03.03.2021
(73) Patentinhaber: PUMA SE, 91074 Herzogenaurach (DE)
(72) Erfinder: HARTMANN, Matthias, 91301 Forchheim (DE)
(74) Vertreter: Gosdin, Carstensen & Partner Patentanwälte Partnerschaftgesellschaft mbB
(86) Internationale Anmeldenummer: PCT/EP2018/060995
(87) Internationale Veröffentlichungsnummer: WO 2019/206435

(56) Entgegenhaltungen:
- EP-A1- 1 738 889
- WO-A2-2007/139832
- US-A- 6 127 010
- US-A1- 2011 131 832
- US-B1- 6 258 421

## Beschreibung

Die Erfindung betrifft einen Schuh, insbesondere einen Sportschuh, mit einem Schuhoberteil und einer mit dem Schuhoberteil verbundenen Sohle, wobei die Sohle zumindest abschnittsweise aus einer Anzahl Hohlkörper besteht, die in ein Trägermaterial eingebettet sind, wobei das Trägermaterial aus einem geschäumten Kunststoff besteht.

Ein Schuh der gattungsgemäßen Art offenbart die US 2011/131832 A1 sowie die EP 1 738 889 A1**.** Andere Lösungen zeigen die US 6 127 010 A**,** die WO 2007/139832 A2 und die US 6 258 421 B1**.**

Bei Schuhen dieser Art wird regelmäßig die Anforderung gestellt, die Sohle so auszugestalten, dass sie einen angenehmen Tragekomfort bietet, dennoch aber gute Feder- und Dämpfungseigenschaften aufweist. Hierbei sind insbesondere auch gute Rückstelleigenschaften der Sohle erwünscht (was auch als "Rebound"-Effekt bezeichnet wird).

Ausgehend von einer Vielzahl vorbekannter Lösungen liegt der vorliegenden Erfindung die Aufgabe zugrunde, einen gattungsgemäßen Schuh bereitzustellen, der diesbezüglich weiter verbessert ist, der also insbesondere gute Rückfeder- bzw. Rückstelleigenschaften aufweist.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den Unteransprüchen.

Der als Trägermaterial zum Einsatz kommende Kunststoff weist dabei bevorzugt viskoelastisches Verhalten auf. Er besteht bevorzugt aus Polyurethan oder weist zumindest dieses Material auf. Unter Viskoelastizität versteht man das Auftreten von partiellem elastischen und viskosen Werkstoffverhalten unter mechanischer Beanspruchung. Im Unterschied zu metallischen Werkstoffen, wo dieses Verhalten erst bei stark erhöhten Temperaturen beobachtet werden kann, tritt das viskoelastische Verhalten bei Kunststoffen schon bei Raumtemperatur auf und besitzt damit ein starken praktischen Einfluss auf das Steifigkeits-, Festigkeits- und Deformationssowie Zähigkeitsverhalten dieser Werkstoffe.

Der als Trägermaterial zum Einsatz kommende Kunststoff weist dabei bevorzugt eine Dichte zwischen 0,15 und 0,35 g/cm³ auf.

Die Härte des als Trägermaterial zum Einsatz kommenden Kunststoffs liegt bevorzugt zwischen 25 und 40 Asker C.

Die Hohlkörper haben bevorzugt eine kugelförmige oder ellipsoide Form. Sie können auch eine längliche und in den Endbereichen abgerundete, insbesondere halbkugelförmige Gestalt aufweisen. Die größte Abmessung eines Hohlkörpers beträgt dabei bevorzugt zwischen 4 mm und 10 mm, besonders bevorzugt zwischen 6 und 8 mm. Die Wandstärke eines Hohlkörpers liegt bevorzugt zwischen 0,3 mm und 1,2 mm, besonders bevorzugt zwischen 0,5 mm und 1,0 mm.

Die aus Hohlkörpern und Trägermaterial bestehende Sohle weist bevorzugt einen Volumenanteil an Hohlkörpern auf, der zwischen 25 % und 75 % liegt, besonders bevorzugt zwischen 30 % und 50 % (jeweils gemessen ohne äußere Belastungen der Sohle).

Die aus Hohlkörpern und Trägermaterial bestehende Sohle kann dabei als Zwischensohle ausgebildet sein, unter der eine Außensohle angeordnet ist.

Der Schuh ist besonders bevorzugt als Jogging-Schuh ausgebildet.

Das Schuhoberteil kann dabei generell beliebig ausgestaltet sein. Es können klassische Textilien oder Leder- bzw. Kunstledermaterialien zum Einsatz kommen. Möglich sind auch gestrickte Materialien. Dabei ist es auch möglich, bei Ausgestaltung als Gestrick das Schuhoberteil sockenartig auszuführen und mit der Sohle zu verbinden. In diesem Falle ist dann das Schuhoberteil als einteiliges, vorzugsweise nahtloses, Strickteil ausgebildet. Hierzu können Zirkular-Strickmaschinen eingesetzt werden, mit denen ein umlaufend geschlossenes Gestrick hergestellt werden kann.

Natürlich sind auch andere Möglichkeiten gegeben, mit denen das Schuhoberteil hergestellt werden kann. Wie erläutert, kann vorgesehen werden, dass das Schuhoberteil in klassischer Weise hergestellt ist, wobei der untere Bereich, der unterhalb der Fußsohle des Trägers des Schuhs verläuft, beispielsweise eine Strobelsohle ist, die mit dem Schuhoberteil vernäht werden kann. Dies kann insbesondere in Kombination mit einem gestrickten oberen Bereich des Schuhoberteils erfolgen.

Das Befestigen des Schuhoberteils am Sohlenteil kann beispielsweise durch Vernähen und/oder Verkleben erfolgen.

Zum erwähnten thermoplastischen Elastomer auf Urethanbasis sei ausdrücklich auf die WO 2010/010010 A1 hingewiesen, in der ein expandierbarer, treibmittelhaltiger thermoplastischer Polymer-Blend offenbart wird, der thermoplastisches Polyurethan und Styrolpolymerisat enthält.

Es hat sich gezeigt, dass bei Ausgestaltung eines Schuhs, insbesondere eines Sportschuhs, in der oben spezifizierten Weise bezüglich des Kompressionsverhaltens des Schuhs sowie hinsichtlich dessen Rückstelleigenschaft (nach Wegnahme der komprimierenden Kraft durch den Fuß des Trägers) sehr vorteilhafte und komfortable Trageeigenschaften des Schuhs erreicht werden können.

Zum viskoelastischen Verhalten des Materials, das als Trägermaterial zum Einsatz kommt, sei angemerkt, dass hierdurch eine günstige Druckverteilung auf den Fuß des Trägers des Schuhs erreicht werden kann, wobei Druckpunkte vermieden werden können. Dieses Material passt sich eher langsam an den Fuß an; hierdurch kommt es nicht zu einem sofortigen Rückfedern des Materials. Beispiele für viskoelastische Materialien sind viskoelastischen Schäume, wie z. B. Ethylenvinylazetat (EVA) und Polyurethan (PU). EVA und PU sind leichtgewichtige und stabile Schaummaterialien, welche viskose und elastische Qualitäten haben. Durch das weiche bzw. elastische Material passt es sich optimal an den Fuß an. Eine weitere vorteilhafte Eigenschaft dieser viskoelastischen Schäume besteht darin, dass sie ohne Belastung wieder ihre ursprüngliche Form annehmen.

Die oben erwähnte Härte nach Asker C ist dem Fachmann hinlänglich bekannt, wozu auf die Normen SRIS 0101 und ABNT NBR 14455 verwiesen wird.

In der Zeichnung ist ein Ausführungsbeispiel der Erfindung dargestellt. Es zeigen:
- Fig. 1: schematisch einen Schuh in der Seitenansicht,
- Fig. 2: schematisch einen Schnitt durch einen Teil der Zwischensohle des Schuhs gemäß Figur 1, nämlich die Einzelheit "X",
- Fig. 3: einen Hohlkörper, der Bestandteil der Sohle ist, wobei dieser als Kugel ausgebildet ist,
- Fig. 4: eine zu Figur 3 alternative Ausgestaltung des Hohlkörpers als Ellipsoid und
- Fig. 5: eine weitere zu Figur 3 alternative Ausgestaltung des Hohlkörpers als längliches Element.

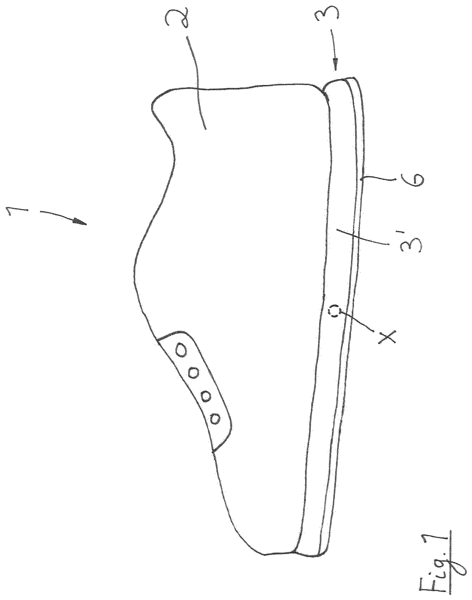

In Figur 1 ist ein Schuh 1 in Form eines Laufschuhs (Joggingschuhs) dargestellt, der ein Schuhoberteil 2 und eine Sohle 3 umfasst. Die Sohle 3 ist mit dem Schuhoberteil 2 verbunden, beispielsweise durch eine Klebeverbindung. Die Sohle 3 besteht im Ausführungsbeispiel aus einer Zwischensohle 3', unter der eine Außensohle 6 angeordnet ist, die mit der Zwischensohle 3' beispielsweise verklebt ist.

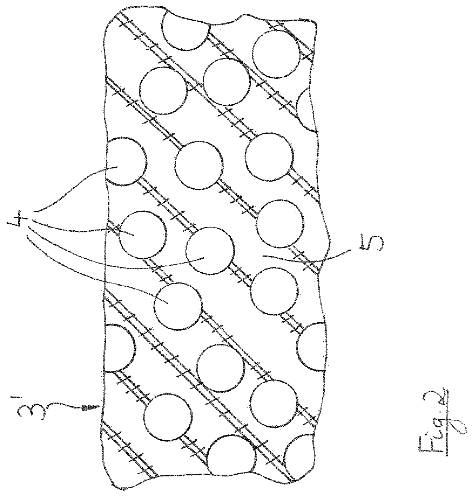

Die Zwischensohle 3' besteht aus einer Materialzusammensetzung, wie sie in Figur 2 illustriert ist. Hiernach ist vorgesehen, dass die Zwischensohle 3' aus einer Anzahl Hohlkörper 4 besteht, die in ein Trägermaterial 5 eingebettet sind. Das Trägermaterial 5 besteht dabei aus einem geschäumten Kunststoff.

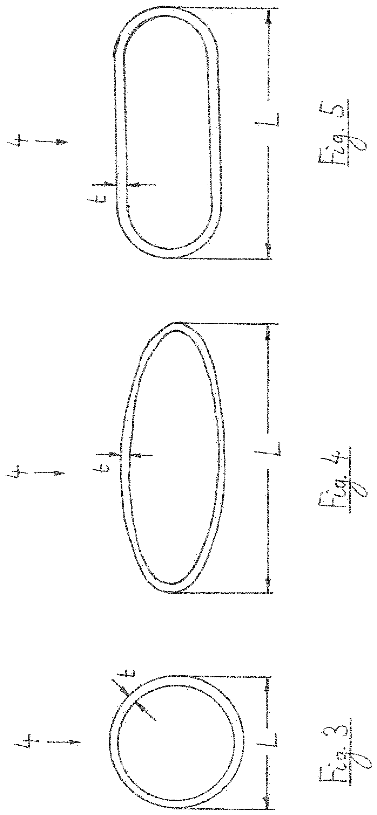

Die Hohlkörper 4 sind in Figur 2 als hohlkugelförmige Körper dargestellt. Hierzu wird auf Figur 3 Bezug genommen, wo ein solcher Hohlkörper 4 in Form einer Hohlkugel dargestellt ist. Die größte Abmessung, hier also in Form des Durchmessers der Kugel, ist mit L bezeichnet. Der Hohlkörper 4 weist dabei eine Wandstärke t auf.

Alternative Ausgestaltungen der Hohlkörper sind in den Figuren 4 und 5 zu sehen. In Figur 4 ist der Hohlkörper 4 als Ellipsoid ausgeführt, in Figur 5 als sich länglich erstreckender Körper, der in seinen Endbereichen als halbkugelige Gestaltung ausgebildet ist.

Die Herstellung der Hohlkörper 4 kann beispielsweise durch Spritzgießen, Blasformen oder Lasersintern erfolgen.

Die Oberfläche der Hohlkörper kann teilweise offen oder komplett geschlossen sein. Bei geschlossenen Hohlkörpern enthält dieser vorzugsweise Luft. Die Hohlkörper 4 zeichnen sich unter anderem dadurch aus, dass sie bei Kompression einen stark nichtlinearen Verlauf der Verformungskraft über der Verformung aufweisen. Demgemäß lässt sich der Hohlkörper 4 bis zu einem gewissen Grad relativ leicht verformen bzw. zusammendrücken, ab einem gewissen Grad der Deformation nimmt der Widerstand gegen weitere Verformung dann stark zu, d. h. es fällt nun schwerer, den Hohlkörper weiter zu verformen.

Dieses Verhalten kann sehr vorteilhaft bei Dämpfungssystemen im Bereich des Sports und hier speziell bei Schuhsohlen (auch Zwischen- bzw. Einlegesohlen) verwendet werden.

Die Hohlkörper 4 nehmen nach Wegnahme der äußeren Kraft wieder vollständig ihre ursprüngliche Form ein.

Die Hohlkörper 4 können mittels Verschweißen oder durch Einsatz von Mikrowellen hergestellt werden, indem zwei Halbkugeln bzw. Halbschalen miteinander verbunden werden. An der Nahtstelle können sich dabei zirkulär umlaufende Stege ausbilden, was die Steifigkeit in durchaus gewünschter Weise positiv beeinflussen kann.

Die Kombination der vorgeschlagenen Hohlkörper 4 mit dem Trägermaterial 5 aus den jeweils oben genannten Materialien hat sehr vorteilhaft zur Folge, dass die Sohle, insbesondere und bevorzugt die Zwischensohle, die aus dieser Materialkombination hergestellt ist, (durch den Einsatz der Hohlkörper 4) eine gute Rückstell- bzw. Rückfedereigenschaft aufweist, dennoch allerdings (durch den Einsatz des Trägermaterials 5) einen hohen Tragekomfort des Schuhs erlaubt.

Das für das Trägermaterial 5 vorgesehene relativ weiche Material (in Form von Polyurethan-Schaum) stellt den hohen Tragekomfort des Schuhs sicher. Indes lieferten die Hohlkörper 4 den gewünschten "Rebound-Effekt", so dass die Sohle, insbesondere in Form der Zwischensohle, einen guten Rückstellungseffekt hat.

Die oben genannten Härten der Materialien sind dabei so gewählt, dass der gewünschte Effekt optimal zur Geltung kommt.

Somit hat der vorgeschlagene Schuh, insbesondere als Laufschuh (Joggingschuh) ausgebildet, optimale Gebrauchseigenschaften im Sinne der oben genannten Aufgabenstellung.

### Bezugszeichenliste:

- 1: Schuh
- 2: Schuhoberteil
- 3: Sohle
- 3': Zwischensohle
- 4: Hohlkörper
- 5: Trägermaterial
- 6: Außensohle

- L: größte Abmessung des Hohlkörpers
- t: Wandstärke des Hohlkörpers

## Patentansprüche

1. Schuh (1), insbesondere Sportschuh, mit einem Schuhoberteil (2) und einer mit dem Schuhoberteil (2) verbundenen Sohle (3), wobei die Sohle (3) zumindest abschnittsweise aus einer Anzahl Hohlkörper (4) besteht, die in ein Trägermaterial (5) eingebettet sind, wobei das Trägermaterial (5) aus einem geschäumten Kunststoff besteht,
**dadurch gekennzeichnet, dass**
das Material der Hohlkörper (4) expandiertes thermoplastisches Polyurethan (E-TPU) ist.

2. Schuh nach Anspruch 1, **dadurch gekennzeichnet, dass** der als Trägermaterial (5) zum Einsatz kommende Kunststoff viskoelastisches Verhalten aufweist.

3. Schuh nach Anspruch 1, **dadurch gekennzeichnet, dass** der als Trägermaterial (5) zum Einsatz kommende Kunststoff Polyurethan aufweist oder aus Polyurethan besteht.

4. Schuh nach einem der Ansprüche 1 bis 3, **dadurch gekennzeichnet, dass** der als Trägermaterial (5) zum Einsatz kommende Kunststoff eine Dichte zwischen 0,15 und 0,35 g/cm³ aufweist.

5. Schuh nach einem der Ansprüche 1 bis 4, **dadurch gekennzeichnet, dass** der als Trägermaterial (5) zum Einsatz kommende Kunststoff eine Härte zwischen 25 und 40 Asker C aufweist.

6. Schuh nach einem der Ansprüche 1 bis 5, **dadurch gekennzeichnet, dass** die Hohlkörper (4) eine kugelförmige oder ellipsoide Form aufweisen.

7. Schuh nach einem der Ansprüche 1 bis 5, **dadurch gekennzeichnet, dass** die Hohlkörper (4) eine längliche und in den Endbereichen abgerundete, insbesondere halbkugelförmige Gestalt aufweisen.

8. Schuh nach einem der Ansprüche 1 bis 7, **dadurch gekennzeichnet, dass** die größte Abmessung (L) eines Hohlkörpers (4) zwischen 4 mm und 10 mm beträgt, vorzugsweise zwischen 6 und 8 mm.

9. Schuh nach einem der Ansprüche 1 bis 8, **dadurch gekennzeichnet, dass** die Wandstärke (t) eines Hohlkörpers (4) zwischen 0,3 mm und 1,2 mm beträgt, vorzugsweise zwischen 0,5 mm und 1,0 mm.

10. Schuh nach einem der Ansprüche 1 bis 9, **dadurch gekennzeichnet, dass** die aus Hohlkörpern (4) und Trägermaterial (5) bestehende Sohle einen Volumenanteil an Hohlkörpern (4) aufweist, der zwischen 25 % und 75 % liegt, vorzugsweise zwischen 30 % und 50 %.

11. Schuh nach einem der Ansprüche 1 bis 10, **dadurch gekennzeichnet, dass** die aus Hohlkörpern (4) und Trägermaterial (5) bestehende Sohle (3) als Zwischensohle (3') ausgebildet ist, unter der eine Außensohle (6) angeordnet ist.

12. Schuh nach einem der Ansprüche 1 bis 11, **dadurch gekennzeichnet, dass** er als Jogging-Schuh ausgebildet ist.

## Claims

1. Shoe (1), in particular a sports shoe, having an upper (2) and a sole (3) connected to said upper (2), wherein at least some areas of the sole (3) consist of a number of hollow bodies (4) embedded in a carrier material (5), wherein said carrier material (5) consists of a foamed plastic material,
**characterized in that**
the material of the hollow bodies (4) is expanded thermoplastic polyurethane (E-TPU).

2. Shoe according to claim 1, **characterized in that** the plastic material used as carrier material (5) has visco-elastic behaviour.

3. Shoe according to claim 1, **characterized in that** the plastic material (5) used as the carrier material (5) comprises polyurethane or consists of polyurethane.

4. Shoe according to one of claims 1 to 3, **characterized in that** the plastic material used as the carrier material (5) has a density between 0.15 and 0.35 g/cm³.

5. Shoe according to one of claims 1 to 4, **characterized in that** the plastic material used as the carrier material (5) has a hardness between 25 and 40 Asker C.

6. Shoe according to one of claims 1 to 5, **characterized in that** the hollow bodies (4) have a spherical or ellipsoidal shape.

7. Shoe according to one of claims 1 to 5, **characterized in that** the hollow bodies (4) have an elongated and in the end regions rounded, in particular hemispherical shape.

8. Shoe according to one of claims 1 to 7, **characterized in that** the largest dimension (L) of a hollow body (4) is between 4 mm and 10 mm, preferably between 6 and 8 mm.

9. Shoe according to one of claims 1 to 8, **characterized in that** the wall thickness (t) of a hollow body (4) is between 0.3 mm and 1.2 mm, preferably between 0.5 mm and 1.0 mm.

10. Shoe according to one of claims 1 to 9, **characterized in that** the sole consisting of hollow bodies (4) and carrier material (5) has a volume fraction of hollow bodies (4) which is between 25 % and 75 %, preferably between 30 % and 50 %.

11. Shoe according to one of claims 1 to 10, **characterized in that** the sole (3) consisting of hollow bodies (4) and carrier material (5) is designed as a midsole (3') under which an outsole (6) is arranged.

12. Shoe according to one of claims 1 to 11, **characterized in that** it is designed as a jogging shoe.

## Revendications

1. Chaussure (1), notamment chaussure de sport, pourvue d'une partie supérieure de chaussure (2) et d'une semelle (3) reliée avec la partie supérieure de chaussure (2), la semelle (3) étant constituée au moins en sections d'un nombre de corps creux (4), qui sont incorporés dans un matériau support (5), le matériau support (5) étant constitué d'une matière plastique moussée,
**caractérisée en ce que**
le matériau des corps creux (4) est du polyuréthane thermoplastique expansé (E-TPU).

2. Chaussure selon la revendication 1, **caractérisée en ce que** la matière plastique utilisée en tant que matériau support (5) présente un comportement viscoélastique.

3. Chaussure selon la revendication 1, **caractérisée en ce que** la matière plastique utilisée en tant que matériau support (5) comprend du polyuréthane ou est constituée de polyuréthane.

4. Chaussure selon l'une quelconque des revendications 1 à 3, **caractérisée en ce que** la matière plastique utilisée en tant que matériau support (5) présente une masse volumique comprise entre 0,15 et 0,35 g/cm³.

5. Chaussure selon l'une quelconque des revendications 1 à 4, **caractérisée en ce que** la matière plastique utilisée en tant que matériau support (5) présente une dureté comprise entre 25 et 40 Asker C.

6. Chaussure selon l'une quelconque des revendications 1 à 5, **caractérisée en ce que** les corps creux (4) présentent une forme sphérique ou ellipsoïdale.

7. Chaussure selon l'une quelconque des revendications 1 à 5, **caractérisée en ce que** les corps creux (4) présentent une configuration allongée et arrondie dans les zones d'extrémité, notamment de forme hémisphérique.

8. Chaussure selon l'une quelconque des revendications 1 à 7, **caractérisée en ce que** la dimension maximale (L) d'un corps creux (4) est comprise entre 4 mm et 10 mm, de préférence entre 6 et 8 mm.

9. Chaussure selon l'une quelconque des revendications 1 à 8, **caractérisée en ce que** l'épaisseur de paroi (t) d'un corps creux (4) est comprise entre 0,3 mm et 1,2 mm, de préférence entre 0,5 mm et 1,0 mm.

10. Chaussure selon l'une quelconque des revendications 1 à 9, **caractérisée en ce que** la semelle constituée de corps creux (4) et de matériau support (5) présente une proportion volumique de corps creux (4) qui est comprise entre 25 % et 75 %, de préférence entre 30 % et 50 %.

11. Chaussure selon l'une quelconque des revendications 1 à 10, **caractérisée en ce que** la semelle (3) constituée de corps creux (4) et de matériau support (5) est configurée en tant que semelle intermédiaire (3'), sous laquelle une semelle extérieure (6) est agencée.

12. Chaussure selon l'une quelconque des revendications 1 à 11, **caractérisée en ce qu'**elle est configurée en tant que chaussure de jogging.
